(19)

Europäisches
Patentamt
European
Patent Office
Office européen
des brevets

(11) **EP 3 034 253 A1**

(12) **EUROPEAN PATENT APPLICATION**

(43) Date of publication:
22.06.2016 Bulletin 2016/25

(51) Int Cl.:
*B26D 1/36* (2006.01)     *B26D 3/10* (2006.01)
*B26D 3/26* (2006.01)     *B26D 1/00* (2006.01)

(21) Application number: 15200892.6

(22) Date of filing: 17.12.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.12.2014 US 201414576375**

(71) Applicant: **Mccain Foods Limited
Florenceville-Bristol, New Brunswick E7L 1B2
(CA)**

(72) Inventors:
• **Rogers, David M.**
  **Woodstock, New Brunswick E7M 3P8 (CA)**
• **Aikens, John Warren**
  **New Maryland, New Brunswick E3C 1B8 (CA)**
• **Rincon, Carlos**
  **Florenceville-Bristol, New Brunswick E7L1Z2
  (CA)**

(74) Representative: **Wallis, Naomi Rachel
Greaves Brewster LLP
Copa House
Station Road
Cheddar BS27 3AH (GB)**

(54) **WIGGLE-SHAPED FOOD STRIP AND METHOD OF CUTTING THE SAME**

(57) A wiggle-shaped food product, and a method of cutting a wiggle-shaped food product strip is disclosed. The method includes cutting an undulating slice from a food product, the slice having two opposed undulating first surfaces, wherein the first surfaces are spaced apart by a slice thickness, wherein the first surfaces have a first undulation amplitude parallel to the slice thickness, and cutting a wiggle-shaped strip from the slice, the strip having two opposed undulating second surfaces, the two first surfaces and the two second surfaces extending longitudinally, wherein the second surfaces are positioned at an angle to the first surfaces, the second surfaces are spaced apart by a strip thickness, the second surfaces have a second undulation amplitude parallel to the strip thickness.

FIG. 1

EP 3 034 253 A1

**Description**

FIELD

This application relates to the field of cut food products, such as food products produced from fruit or vegetables.

INTRODUCTION

This application relates to food products and methods of cutting same. More particularly, this application relates to wiggle-shaped food product strips which undulate in at least two different directions along the length of the strips, as well as methods of cutting the foregoing products.

SUMMARY

In a first aspect, there is a method of cutting a wiggle-shaped food product strip. The method may comprise cutting an undulating slice from a food product, and cutting a wiggle-shaped strip from the slice.
The slice may have two opposed undulating first surfaces. The first surfaces may be spaced apart by a slice thickness. The first surfaces may have a first undulation amplitude parallel to the slice thickness, and the first undulation amplitude may be at least ¼ of the slice thickness.
The strip may have two opposed undulating second surfaces. The two first surfaces and the two second surfaces may extend longitudinally. The second surfaces may be positioned at an angle to the first surfaces, the second surfaces may be spaced apart by a strip thickness, the second surfaces may have a second undulation amplitude parallel to the strip thickness, and the second undulation amplitude may be at least ¼ of the strip thickness.
In another aspect, a method of cutting a wiggle-shaped food product strip is provided. The method may comprise cutting an undulating slice from a food product, the slice having two opposed undulating first surfaces, and cutting a wiggle-shaped strip from the slice, the strip having two opposed undulating second surfaces, the two first surfaces, and a Serving Yield of at least 2.
In another aspect, a wiggle-shaped food product strip is provided. The food product strip may comprise an elongate food product strip. The strip may comprise a first pair of opposed undulating first surfaces, and a second pair of opposed undulating second surfaces, the first and second surfaces extending longitudinally. The first surfaces may be spaced apart by a first thickness, the first surfaces may have a first undulation amplitude parallel to the first thickness, and the first undulation amplitude may be at least ¼ of the first thickness.
The second surfaces may be spaced apart by a second thickness, the second surfaces may have a second undulation amplitude parallel to the second thickness, and the second undulation amplitude may be at least ¼ of the second thickness.
In another aspect, a wiggle-shaped food product strip is provided. The food product strip may comprise an elongate food product strip having opposed first and second ends, at least four undulating longitudinal surfaces each extending between the first and second ends, and a Serving Yield of at least 2.
In another aspect, a package of wiggle-shaped food product strip is provided. Each food product strip may comprise an elongate food product strip. The strip may comprise a first pair of opposed undulating first surfaces, and a second pair of opposed undulating second surfaces, the first and second surfaces extending longitudinally. The first surfaces may be spaced apart by a first thickness, the first surfaces may have a first undulation amplitude parallel to the first thickness, and the first undulation amplitude may be at least ¼ of the first thickness.
The second surfaces may be spaced apart by a second thickness, the second surfaces may have a second undulation amplitude parallel to the second thickness, and the second undulation amplitude may be at least ¼ of the second thickness.
In another aspect, a package of wiggle-shaped food product strips is provided. Each food product strip may comprise an elongate food product strip having opposed first and second ends, at least four undulating longitudinal surfaces each extending between the first and second ends, and a Serving Yield of at least 2.

DRAWINGS

FIG. 1 is a perspective view of a wiggle-shaped food product strip in accordance with at least one embodiment;

FIG. 2 is a top plan view of the wiggle-shaped food product strip of FIG. 1;

FIG. 3 is a front elevation view of the wiggle-shaped food product strip of FIG. 1;

FIG. 4 is a cross-sectional view taken along line 4-4 in FIG. 3;

FIG. 5 is a cross-sectional view taken along line 5-5 in FIG. 3;

FIG. 6 is a perspective view of a wiggle-shaped food product strip in accordance with another embodiment;

FIG. 7 is a top plan view of the wiggle-shaped food product strip of FIG. 6;

FIG. 8 is a front elevation view of the wiggle-shaped food product strip of FIG. 6;

FIG. 9 is a cross-sectional view taken along line 9-9 in FIG. 8;

FIG. 10 is a cross-sectional view taken along line 10-10 in FIG. 8;

FIG. 11 is a perspective view of a wiggle-shaped food product strip in accordance with another embodiment;

FIG. 12 is a top plan view of the wiggle-shaped food product strip of FIG. 11;

FIG. 13 is a front elevation view of the wiggle-shaped food product strip of FIG. 11;

FIG. 14 is a cross-sectional view taken along line 14-14 in FIG. 13;

FIG. 15 is a cross-sectional view taken along line 15-15 in FIG. 13;

FIG. 16 is a perspective view of a wiggle-shaped food product strip in accordance with another embodiment;

FIG. 17 is a top plan view of the wiggle-shaped food product strip of FIG. 16;

FIG. 18 is a front elevation view of the wiggle-shaped food product strip of FIG. 16;

FIG. 19 is a cross-sectional view taken along line 19-19 in FIG. 18;

FIG. 20 is a cross-sectional view taken along line 20-20 in FIG. 18;

FIG. 21 is a perspective view of a plurality of food product strips in a cup, in accordance with a method of measuring Serving Yield;

FIG. 22 is a perspective view of the plurality food strips in the cup of FIG. 21, with a wall of the cup partially cut away;

FIG. 23 is a top plan view of the plurality food strips in the cup of FIG. 21;

FIG. 24 is a front elevation view of the plurality food strips in the cup of FIG. 21, with the wall of the cup partially cut away as in FIG. 22;

FIG. 25 is a perspective view of a plurality of prior art food product strips in a cup, in accordance with a method of measuring Serving Yield;

FIG. 26 is a top plan view of the plurality of prior art food product strips in the cup of FIG. 25;

FIG. 27 is a front elevation view of the plurality of prior at food product strips in the cup of FIG. 25, with a wall of the cut partially cut away;

FIG. 28 is a perspective view of a plurality of food product strips in a cup, in accordance with the method of measuring Serving Yield;

FIG. 29 is a perspective view of the plurality food strips in the cup of FIG. 28, with a wall of the cup partially cut away;

FIG. 30 is a top plan view of the plurality food strips in the cup of FIG. 28;

FIG. 31 is a front elevation view of the plurality food strips in the cup of FIG. 28, with the wall of the cup partially cut away as in FIG. 29;

FIG. 32 is a perspective view illustrating a method of cutting a wiggle-shaped food strip in accordance with at least one embodiment;

FIG. 33 is a perspective view of an apparatus for cutting wiggle-shaped food strips in accordance with at least one embodiment;

FIG. 34 is a top view of the apparatus of FIG. 33;

FIG. 35 is a cross-sectional view taken along line 35-35 in FIG. 34;

FIG. 36 is a perspective view of a slab knife, in accordance with at least one embodiment;

FIG. 37 is a top plan view of the slab knife of FIG. 36;

FIG. 38 is a side elevation view of the slab knife of FIG. 36;

FIG. 39 is a front elevation view of the slab knife of FIG. 36;

FIG. 40 is a perspective view of a strip knife, in accordance with at least one embodiment;

FIG. 41 is a side elevation view of the strip knife of FIG. 40;

FIG. 42 is a top plan view of the strip knife of FIG. 40;

FIG. 43 is a front elevation view of the strip knife of FIG. 40; and

FIG. 44 is a perspective view of a retail package of food product strips, in accordance with at least one embodiment.

DESCRIPTION OF VARIOUS EMBODIMENTS

Numerous embodiments are described in this application, and are presented for illustrative purposes only. The described embodiments are not intended to be limiting in any sense. The invention is widely applicable to numerous embodiments, as is readily apparent from the disclosure herein. Those skilled in the art will recognize that the present invention may be practiced with modification and alteration without departing from the teachings disclosed herein. Although particular features of the present invention may be described with reference to one or more particular embodiments or figures, it should be understood that such features are not limited to usage in the one or more particular embodiments or figures with reference to which they are described.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

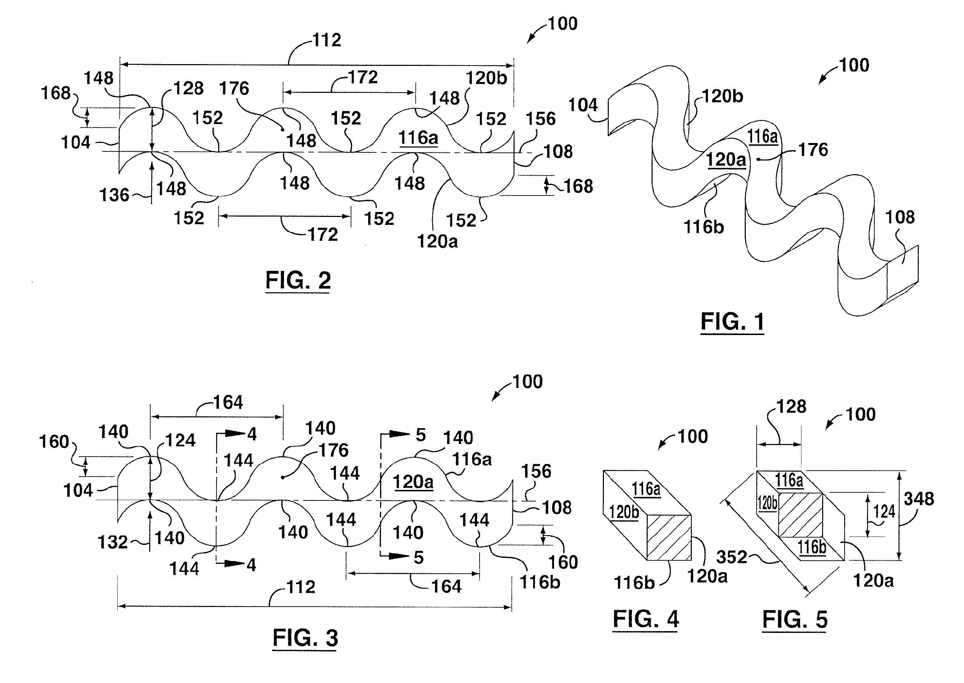

Referring to FIGS. 1-5, a wiggle-shaped elongate strip 100 is shown in accordance with at least one embodiment. As used herein, and in the claims, a strip that is "wiggle-shaped" has a shape that undulates in at least two different directions along the length of the strip. Strip 100 may be cut from any suitable food product, including fruits and vegetables. Preferably, strip 100 is cut from a root vegetable such as potato, sweet potato, taro, carrot, or radish for example.

As shown, strip 100 has a first end 104, a second end 108, and a longitudinal length 112 extending from the first end 104 to the second end 108. Strip 100 may have a plurality of sides extending between first and second ends 104 and 108. In the illustrated example, strip 100 includes a first pair of opposite first sides 116a and 116b, and a second pair of opposite second sides 120a and 120b. In alternative embodiments, strip 100 may include any suitable number of sides which extend the length of strip 100. For example, strip 100 may include between 3 and 8 sides extending the length of strip 100.

Strip 100 may have a first thickness 124 between first sides 116a and 116b, and a second thickness 128 between second sides 128 between second sides 120a and 120b. That is, first sides 116a and 116b may be spaced apart in a first direction 132 by the first thickness 124, and second sides 120a and 120b may be spaced apart in a second direction 136 by the second thickness 128. The first and second directions 132 and 136 may be perpendicular as shown. For example, first sides 116a and 116b may be substantially perpendicular to second sides 120a and 120b. In alternative embodiments, first and second directions 132 and 136 may extend at any other suitable (non-zero) angle to each other.

Preferably, first side 116a is parallel to first side 116b, and second side 120a is parallel to second side 120b. This may provide strip 100 with a constant thickness 124 as measured in the first direction 132. Alternatively, first side 116a may be non-parallel to first side 116b, or second side 120a may be non-parallel to second side 120b, or both. For example, first side 116a may extend toward convergence with first side 116b. In this example, first sides 116a and 116b may be spaced farther apart at one longitudinal end 104 than at the other longitudinal end 108. In some cases, first sides 116a and 116b may converge at longitudinal end 108. This may provide strip 100 with a thickness 124 measured in the first direction 132 which tapers from one longitudinal end 104 to the other longitudinal end 108.

As shown, first sides 116a and 116b, and second sides 120a and 120b may undulate between along the length 112 of strip 100. For example, first and second sides 116a, 116b, 120a, and 120b may undulate in the first and second directions 132 and 136 between first and second ends 104 and 108. FIG. 2 shows a top plan view of strip 100 facing first side 116a. As shown, first sides 116a and 116b (116b is obscured from view) may undulate in the second direction 136 parallel to the surface of first sides 116a and 116b, and second sides 120a and 120b may undulate in the second direction 136 perpendicular to the second sides 120a and 120b. Similarly, FIG. 3 shows a side elevation view of strip 100 facing second side 120a. As shown, second sides 120a and 120b (120b is obscured from view) may undulate in the first direction 132 parallel to the surface of second sides 120a and 120b, and first sides 116a and 116b may undulate in the first direction 132 perpendicular to the first sides 116a and 116b.

Each of first and second sides 116a, 116b, 120a, and 120b may follow any suitable undulation pattern. In the illustrated example, each of first side 116a and 116b undulates in the first direction 132 between alternating peaks 140 and valleys 144 according to a sinusoidal pattern. Similarly, each of second sides 120a and 120b undulates in the second direction 136 between alternating peaks 148 and valleys 152. In alternative embodiments, one or more of first and second sides 116a, 116b, 120a, or 120b may undulate in the first or second direction 132 or 136 according to any other suitable pattern, such as a zigzag pattern, an elliptical pattern, an exponential pattern, or another regular, irregular, continuous or discontinuous undulation pattern.

First side 116a may have the same undulation pattern as first side 116b, and second side 120a may have the same undulation pattern as second side 120b. Preferably, first sides 116a and 116b have the same undulation pattern as second sides 120a and 120b. In alternative embodiments, one or more of first and second sides 116a, 116b, 120a, or 120b may have a different undulation pattern than one or more of the other sides.

Preferably, the undulation of first side 116a in the first direction 132 is in phase with the undulation of first side 116b in the first direction 132, as shown. That is, the lengthwise position of peaks 140 and valleys 144 of first side 116a matches the lengthwise position of peaks 140 and valleys 144 of first side 116b. Where the undulation pattern of the first sides 116a and 116b is also the same, this may provide strip 100 with a constant first thickness 124 in the first direction 132 across the length 112 of the strip 100.

The undulation of first side 116a in first direction 132 may be in phase with the undulation of first side 116b in the first direction 132, at the same time as the undulation of the second side 120a in the second direction 136 is in phase with the undulation of the second side 120b in the second direction 136. This may provide strip 100 with constant thicknesses 124 and 128 in the first and second directions 132 and 136, at least when the undulation pattern of first sides 116a and 116b is the same, and the undulation pattern of the second sides 120a and 120 is the same. In some cases, this may provide strip 100 with a constant cross-sectional shape and size.

Strip 100 may have a longitudinal centerline 156 extending in three-dimensional space between first and second ends 104 and 108. Undulations of first sides 116a and 116b in the first direction 132 may be described in terms of amplitude 160, and wavelength 164, and undulations of second sides 120a and 120b in the second direction 136 may be described in terms of amplitude 168 and wavelength 172. In the example shown, first sides 116a and 116b undulate in phase with each other, second sides 120a and 120 undulate in phase with each other, and first sides 116a and 116b undulate in phase with second sides 120a and 120b. That is, the lengthwise position of peaks 140 and valleys 144 of first sides 116a and 116b match the lengthwise position of peaks 148 and valleys 152 of second sides 120a and 120b. This may permit strip 100 to curve furthest from centerline 156, thereby enlarging the overall footprint of strip 100. Figures 1-3 illustrate a, longitudinal position 176 where peaks 140 and 148 align. Longitudinal position 176 is located at a distance of one amplitude 160 away from centerline 156 in first direction 132, and one amplitude 168 away from centerline 156 in second direction 136. In one aspect, this may increase the Serving Yield of strip 100 as described in more detail below.

In alternative embodiments, undulation of first side 116a in first direction 132 may be out of phase with the undulation of first side 116b in first direction 132. Additionally, undulation of second side 120a in second direction 136 may be out of phase with undulation of second side 120b in the second direction 136. In either case, or both in combination, strip 100 may have first and or second thicknesses 124 and 128 that alternately increase and decrease with every wavelength along the length 112 of strip 100. This may provide strip 100 with alternating thick portions and thin portions. In turn, this may provide a strip 100 that may be cooked (e.g. deep fried or baked) to provide crispy thin portions that alternate with softer thick portions. Such variation in texture may provide a desirable mouth feel, taste, and texture for consumers.

In the illustrated example, first sides 116a and 116b undulate in the first direction 132 with the same amplitude 160 and wavelength 164. In alternative embodiments, one or both of the amplitude 160 and wavelength 164 may differ between the undulation of first sides 116a and 116b in the first direction 132. Similarly, second sides 120a and 120b as shown undulate in the second direction 136 with the same amplitude 160 and 168. In alternative embodiments, one or both of the amplitude 160 and wavelength 164 may differ between the undulation of second sides 120a and 120b in the second direction 136.

As shown, first sides 116a and 116b may undulate in the first direction 132 with an amplitude 160 and wavelength 164 that is the same as the amplitude 168 and wavelength 172 of second sides 120a and 120b. In alternative embodiments, amplitude 160 may be different from amplitude 168, wavelength 164 may be different from wavelength 172, or both.

First and second sides 116a, 116b, 120a, and 120b may undulate with any suitable wavelength. In the illustrated example, first sides 116a and 116b undulate in the first direction 132 with a wavelength 164 that is one third of the length 112, whereby each of first sides 116a and 116b includes three peaks 140 and three valleys 144. Similarly, second sides 120a and 120b as shown undulate in the second direction 136 with a wavelength 172 that is one third of the length 112, whereby each of second sides 120a and 120b includes three peaks 148 and three valleys 152. In alternative embodiments, each side 116a, 116b, 120a, and 120b may undulate with a wavelength 164 or 172 of between 1/100 and 2/3 of the length 112, more preferably between 1/50 and 3/8 of the length 112, and most preferably 1/10 to 1/2 of the length 112.

Preferably, first and second sides 116a, 116b, 120a, and 120b undulate with amplitudes 160 and 168, and wavelengths 164 and 172 that are constant along the length 112 of strip 100, as shown. This may provide strip 100 with a uniform appearance from end 104 to end 108. In turn, this may permit a long strip 100 to be divided into a plurality of shorter similar strips 100, where the amplitudes 160 and 168 and wavelengths 164 and 172 are the same between the shorter strips 100. In alternative embodiments, one or more of the amplitudes 160 and 168, and wavelengths 164 and 172 may vary along the length 112 of strip 100. This may provide strip 100 with an imprecise homestyle appearance, which may be appealing for some consumers.

Strip 100 may undulate with any suitable amplitudes 160 and 168, and wavelengths 164 and 172. Preferably strip 100 undulates with large amplitudes 160 and 168 for increasing the Serving Yield of strip 100, as discussed in more detail below. FIGS. 1-5 illustrate an embodiment having amplitudes 160 and 168 which are one half of the first and second thicknesses 124 and 128, respectively. In this embodiment, valleys 144 of first side 116a and peaks 140 of first side 116b meet centerline 156 tangentially when viewed in profile from a perspective parallel to first sides 116a and 116b (i.e. the perspective of FIG. 3). Similarly, valleys 152 of second side 116a and peaks 148 of second side 116b meet centerline 156 tangentially when viewed in profile from a perspective parallel to second sides 120a and 120b (i.e. the perspective of FIG. 2).

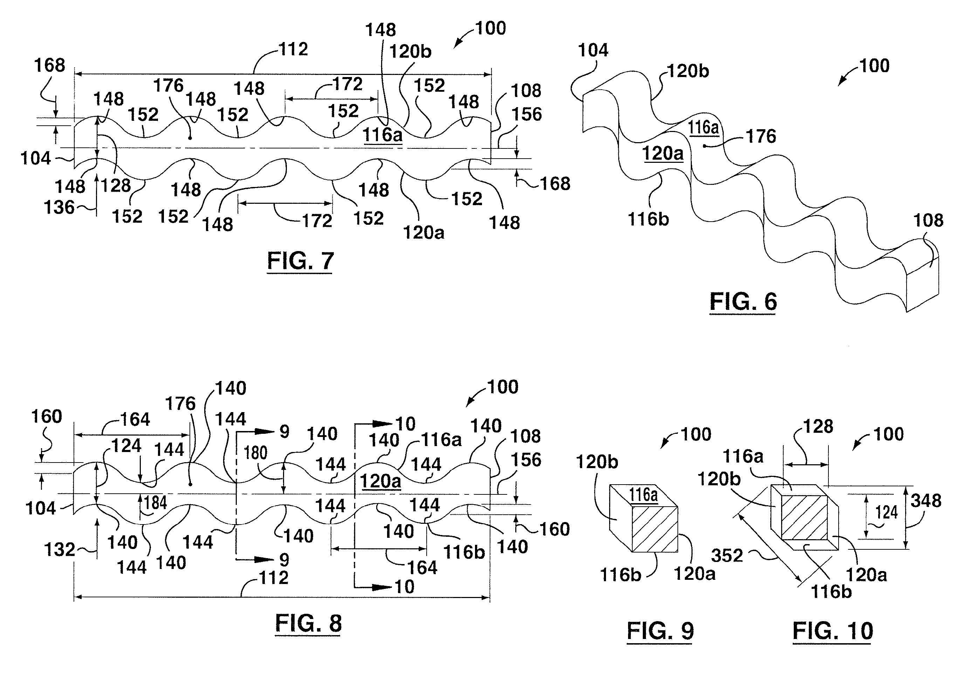

In other embodiments, amplitudes 160 and 168 may be less than one half of the first and second thicknesses 124 and 128, respectively. For example, amplitudes 160 and 168 may be between one quarter (1/4) and one half (1/2) of the first and second thicknesses 124 and 128, respectively. FIGS. 6-10 illustrate an embodiment having amplitudes 160 and 168 which are one quarter of the first and second thicknesses 124 and 128, respectively. In this embodiment, the distance between centerline 156 and each of sides 116a, 116b, 120a, and 120b, when viewed in profile from a perspective parallel to that side 116a, 116b, 120a, or 120b, varies repeatedly by 200% along the length 112 of strip 100. For example, when viewed in profile from a perspective parallel to side 116a (i.e. the perspective of FIG. 8), distance 180 between peaks 140 and centerline 156 is double the distance 184 between valleys 144 and centerline 156. A similar relationship exists for sides 116b, 120a, and 120b.

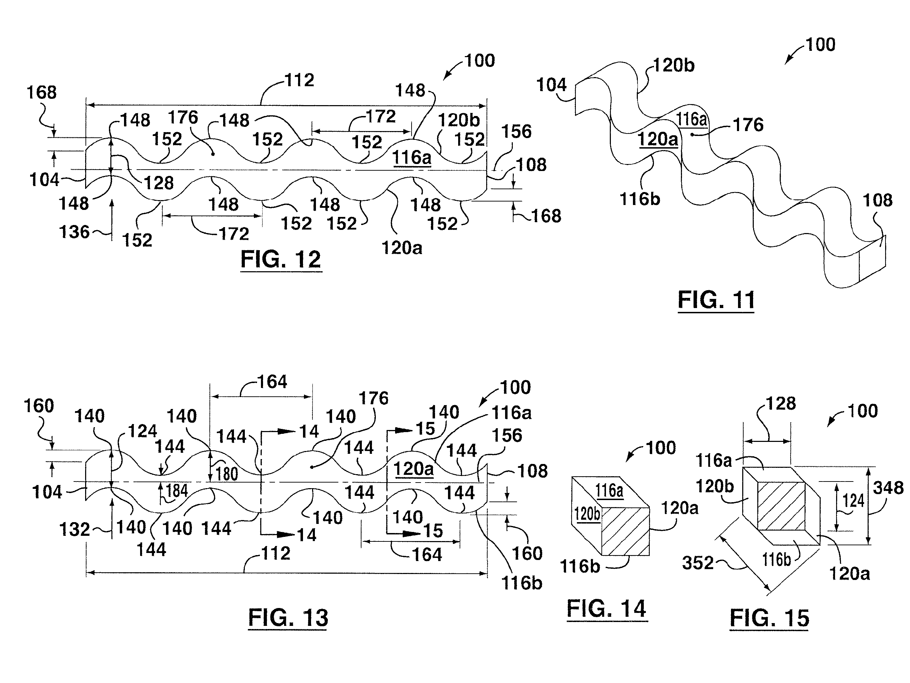

FIGS. 11-15 illustrate an embodiment having amplitudes 160 and 168 which are one third of the first and second thicknesses 124 and 128, respectively. In this embodiment, the distance between centerline 156 and each of sides 116a, 116b, 120a, and 120b, when viewed in profile from a perspective parallel to that side 116a, 116b, 120a, or 120b, varies repeatedly by 300% along the length 112 of strip 100. For example, when viewed in profile from a perspective parallel to side 116a (i.e. the perspective of FIG. 13), distance 180 between peaks 140 and centerline 156 is triple the distance 184 between valleys 144 and centerline 156. A similar relationship exists for the distances between centerline 156 and sides 116b, 120a, and 120b.

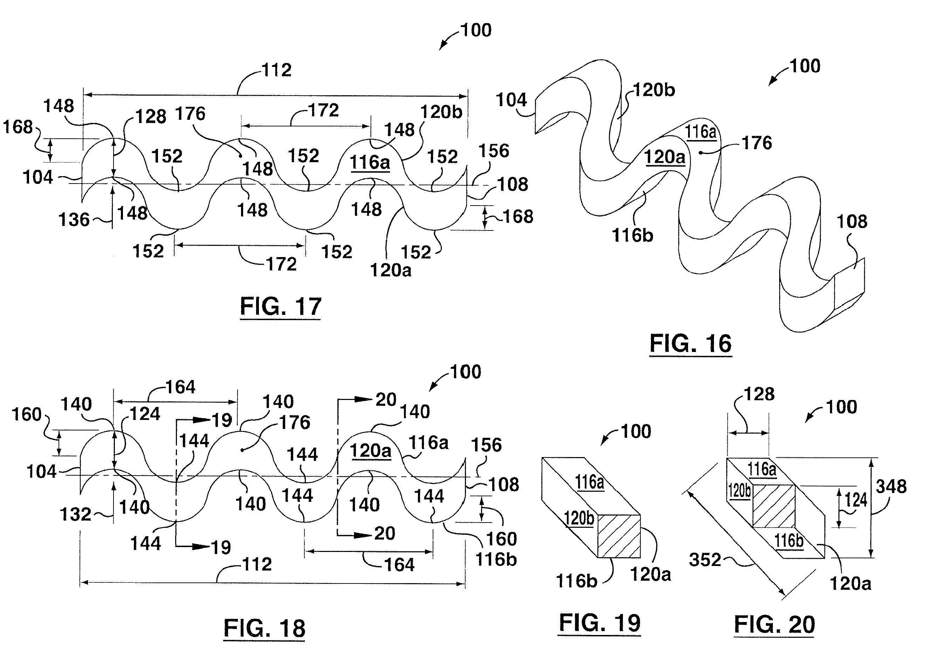

In some embodiments, amplitudes 160 and 168 may be greater than one half of the first and second thicknesses 124 and 128, respectively. For example, amplitudes 160 and 168 may be between one half (1/2) and three times the first and second thicknesses 124 and 128, respectively. FIGS. 16-20 illustrate an embodiment having amplitudes 160 and 168 which are two thirds of the first and second thicknesses 124 and 128. In this embodiment, centerline 156 extends between the peaks and valleys of each side 116a, 116b, 120a, and 120b, when viewed in profile from a perspective parallel to that side 116a, 116b, 120a, or 120b. For example, centerline 156 extends below peaks 140 of sides 116a and 116b, and above valleys 144 of sides 116a and 116b, when viewed in profile from a perspective parallel to sides 116a and 116b (i.e. the perspective of FIG. 18). As shown, centerline 156 may intersect each side 116a and 116b twice per wavelength 164, when viewed in profile from a perspective parallel to sides 116a and 116b.

Referring again to FIGS. 1-5, strip 100 may undulate with any suitable wavelength 164 and 172. Preferably, strip 100 undulates with large wavelengths 164 and 172 to provide strip 100 with increased serving yield, as discussed in more detail below. In the illustrated embodiment, strip 100 is shown having wavelengths 164 and 172 of six times the amplitudes 160 and 168, respectively. Further, wavelengths 164 and 172 as shown are three times the thicknesses 124 and 128, respectively.

In some embodiments, wavelengths 164 and 172 may be greater than six times the amplitudes 160 and 168, respectively. For example, wavelengths 164 and 172 may be between six and fifteen times the amplitudes 160 and 168, respectively. FIGS. 6-10 illustrate an embodiment of strip 100 having wavelengths 164 and 172 of nine times the amplitudes 160 and 168, respectively. Also, wavelengths 164 and 172 as shown are 2.25 times the first and second thicknesses 124 and 128, respectively. FIGS. 11-15 illustrate an embodiment of strip 100 having wavelengths 164 and 172 of eight times the amplitudes 160 and 168, respectively. Also, wavelengths 164 and 172 as shown are 2.67 times the first and second thicknesses 124 and 128, respectively.

In some embodiments, wavelengths 164 and 172 may be less than six times the amplitudes 160 and 168, respectively. For example, wavelengths 164 and 172 may be between three and five times the amplitudes 160 and 168, respectively. FIGS. 16-20 illustrate an embodiment of strip 100 having wavelengths 164 and 172 of five times the amplitudes 160 and 168, respectively. Also, wavelengths 164 and 172 as shown are 3.33 times the first and second thicknesses 124 and 128, respectively.

Preferably, strip 100 may occupy a large volume to provide an increased Serving Yield. Serving Yield is defined as the average volume occupied per unit material volume of strip 100, as measured when a plurality of strips 100 are packed together. Serving Yield is measured according to the procedure defined below. As used herein and in the claims, "material volume" means the volume of food product contained in the strip 100. High Serving Yield is the result of high Percentage Open Volume when a plurality of strips 100 are packed together. Open Volume is the volume of air (or another gas) between strips 100 when strips 100 are packed together. Percentage Open Volume is the percentage of the Open Volume to the volume occupied by a maximum number of strips 100 packed together. Open Volume and Percentage Open Volume are measured according to the procedure defined below.

For example, the total material volume in the number of strips 100 required to provide a serving, where a serving is measured by occupied volume, may be less for strips 100 having greater Serving Yield than for strips 100 having lesser Serving Yield. That is, a given volume of material (e.g. 1 large potato), may produce a greater number of servings if formed into strips 100 with a greater Serving Yield, than if formed into strips 100 of a lesser Serving Yield. In one aspect, this may assist consumers with portion control, in that consumers may be better able to eat fewer strips 100 if they perceive they have eaten a large volume of strips 100. For example, a "plateful" of strips 100 may constitute less material volume where the strips 100 have a higher Serving Yield. Consuming fewer strips 100 (i.e. less material volume) may mean consuming fewer calories, less applied seasoning (e.g. salt), and less cooking additives (e.g. butter and oil). Accordingly, strips 100 having a higher Serving Yield may promote better consumer health.

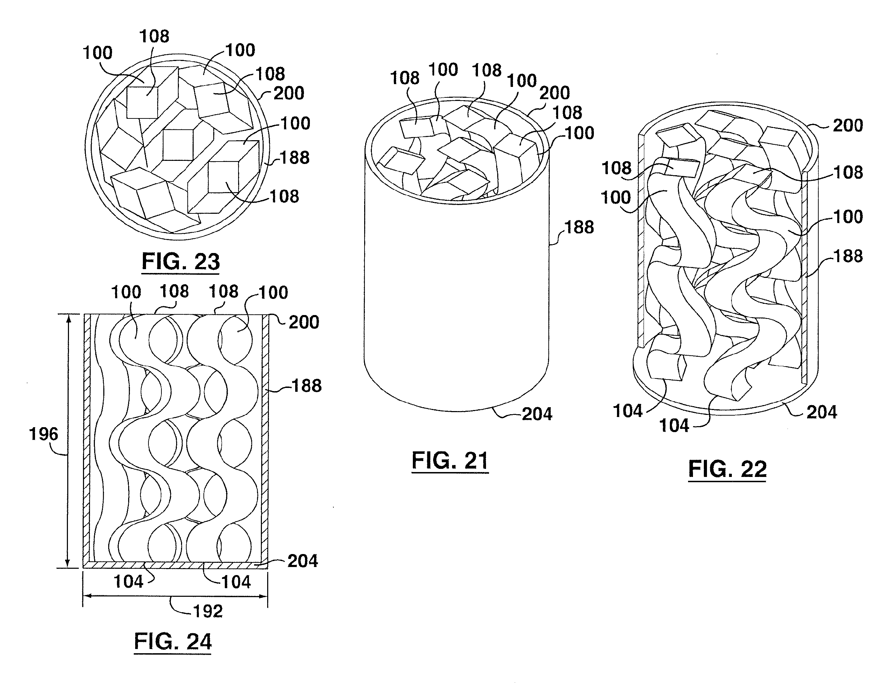

Reference is now made to FIGS. 21-24, which illustrate a method of measuring Serving Yield, Open Volume, and Percentage Open Volume. First, pack as many strips 100 as will fit into a cylindrical cup 188 having a 2 inch (50.8 mm) inside diameter 192, and a 3 inch (76.2 mm) inside height 196. The total inside volume of the cup 188 is 9.42 in³ (154.4 mL). Each strip 100 is formed with a length 112 of 3 inches (76.2 mm), and is inserted vertically aligned as shown so that an end 108 of each strip 100 is substantially aligned with an upper end 200 of cup 188. Strips 100 are substantially randomly oriented in a vertical position without any effort made to nest strips 100 together. An end 104 of each strip 100 must touch the bottom end 204 of cup 188.

Serving Yield may then be calculated according to equation (1):

$$(1) \quad Serving\ Yield = \frac{Total\ Volume\ of\ Cup}{Total\ Material\ Volume\ of\ Strips\ (in^3)} = \frac{9.42\ in^3}{Total\ Material\ Volume\ of\ Strips\ (in^3)}$$

The *Total Material Volume of Strips* is equal to the volume of food product in the strips 100 inside cup 188. The volume of strips 100 may be determined according to any suitable method, such as for example by calculation, or fluid displacement (i.e. by placing strips 100 into a container of fluid and observing the rise in fluid level).

Open Volume may be calculated according to equation (2):

$$(2) \quad Open\,Volume = (Total\,Volume\,of\,Cup) - (Total\,Material\,Volume\,of\,Strips(in^3))$$
$$= 9.42\,in^3 - (Total\,Material\,Volume\,of\,Strips\,(in^3))$$

Percentage Open Volume may be calculated according to equation (3):

$$(3) \quad Percentage\,Open\,Volume = \frac{Open\,Volume}{Total\,Volume\,of\,Cup} = \frac{Open\,Volume}{9.42in^3}$$

FIGS. 21-24 show an example of measuring Serving Yield, Open Volume, and Percentage Open Volume for a plurality of strips 100 which are substantially similar to each other. As used herein and in the claims, strips 100 are "substantially similar" where the strips 100 are formed according to all of the same parameters: thicknesses, amplitudes, wavelengths, length, and phase alignment. In the example shown, each strip 100 has thicknesses 124 and 128 of 0.375 inches, amplitudes 160 and 168 of 0.25 inches (two thirds of the thicknesses 124 and 128), wavelengths 164 and 172 of 1.25 inches (five times the amplitudes 160 and 168), and a length of 3 inches (see FIGS. 1-5 where strip geometry is labeled). Undulation of all sides 116a, 116b, 120a, and 120b is in phase with each other. As shown, six strips 100 were able to be packed inside of cup 188. The six strips 100 had a total material volume of 2.532 $in^3$. This provided each strip 100 with a Serving Yield of 9.42 $in^3$ / 2.532 $in^3$ = 3.72, an Open Volume of 9.42 $in^3$ - 2.532 $in^3$ = 6.888 $in^3$, and a Percentage open Volume of 6.888 $in^3$ /9.42 $in^3$ = 73%.

Preferably, strips 100 have a Serving Yield of at least 2, more preferably greater than 2.5, and most preferably greater than 3. For example, strips 100 preferably have a Serving Yield of between 2 and 5, more preferably between 2.5 and 4.5, and most preferably between 2.75 and 4. Further, strips preferably have a Percentage Open Area of at least 50%, more preferably at least 60%, and most preferably at least 67%. For example, strips 100 preferably have a Percentage Open Area of between 50% and 80%, more preferably between 60% and 78%, and more preferably between 64% and 75%.

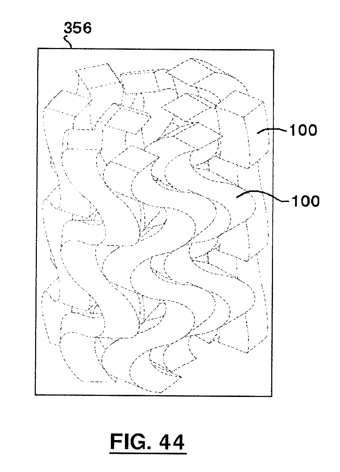

Referring to FIG. 44, in some embodiments, a plurality of strips 100 may be packaged in a retail package 356 for distribution and sale. Package 356 may be formed of any suitable material, such as plastic, or metal foil. Preferably, retail package 356 is air-tight to preserve the freshness and food safety of strips 100 inside. Package 356 may contain any number of strips 100. Preferably package 356 contains 5 to 1000 strips 100, more preferably 10 to 500 strips 100, and most preferably 20 to 150 strips 100. Optionally, strips 100 in package 356 may be frozen.

Strips 100 may have a high Serving Yield (e.g. within one of the ranges described above), whereby fewer strips 100 of a given size may be required to fill the volume of the retail package 356. In turn, strips 100 may have a large Percentage Open area (e.g. within any of the ranges above). This may permit the air between strips to provide sufficient air volume to cushion and protect strips 100 during storage and shipping, without having to leave a portion of the packaging 356 intentionally empty.

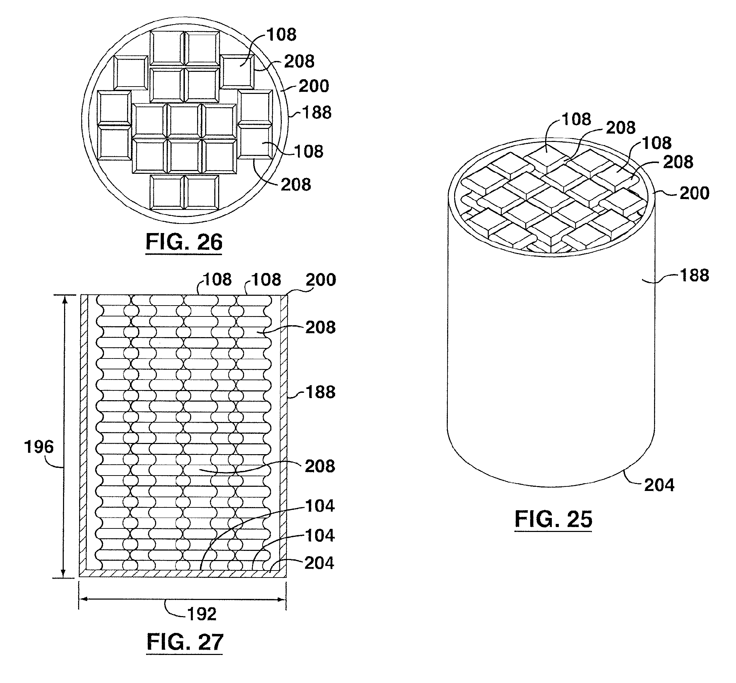

For comparison, FIGS. 25-27 show an example of measuring Serving Yield, Open Volume, and Percentage Open Volume for a plurality of prior art strips 208. As shown, prior art strips 208 have small amplitudes 160 and 168 and small wavelengths 164 and 172, compared to thicknesses 124 and 128. As illustrated, each strip 208 has a thicknesses 124 and 128 which alternate between 0.375 inches and 0.25 inches (for an average thickness 124 and 128 of 0.3125 inches), amplitudes 160 and 168 of 0.03125 inches (0.1 times the average thicknesses 124 and 128), wavelengths 164 and 172 of 0.25 inches (0.8 times the average thicknesses 124 and 128), and a length 112 of 3 inches (see FIGS. 1-5 where strip geometry is labeled). Undulation of first side 116a is 180 degrees out of phase with undulation of first side 116b, undulation of second side 120a is 180 degrees out of phase with undulation of second side 120b, and undulation of first sides 116a and 116b is in phase with undulation of second sides 120a and 120b respectively.

As shown, 18 strips 208 were able to be packed inside of cup 188. The 18 strips 208 had a total material volume of 5.4 $in^3$. This provided each strip 208 with a Serving Yield of 9.42 $in^3$ / 5.4 $in^3$ = 1.74, an Open Volume of 9.42 $in^3$ - 5.4 $in^3$ = 4.02 $in^3$, and a Percentage open Volume of 4.02 $in^3$ / 9.42 $in^3$ = 43%.

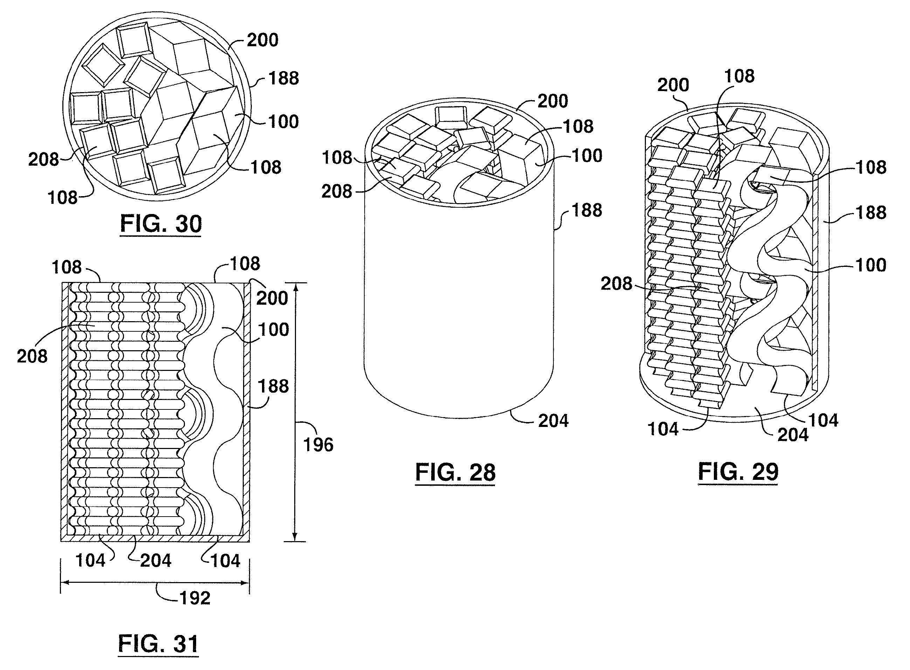

Reference is now made to FIGS. 28-31, which show an example of measuring an average Serving Yield, Open Volume, and Percentage Open Volume for a combination of the strips 100 of FIGS. 21-24, and prior art strips 208 of FIGS. 25-27. In the illustrated example, the ratio of the number of strips 208 to the number of strips 100 is 3:1. In some embodiments, strips 100 may be added to strips 208 to increase the average Serving Yield and Percentage Open Volume of the combination.

As shown, nine strips 208 and three strips 100 were able to be packed inside of cup 188. The strips 100 and 208 had a total material volume of 0.422 $in^3$. This provided each strip 100 and 208 with a combined average Serving Yield of 9.42 $in^3$ / 3.97 $in^3$ = 2.37, an Open Volume of 9.42 $in^3$ - 3.97 $in^3$ = 5.45 $in^3$, and a Percentage open Volume of



**EP 3 034 253 A1**

5.45 in$^3$ / 9.42 in$^3$ = 58%.

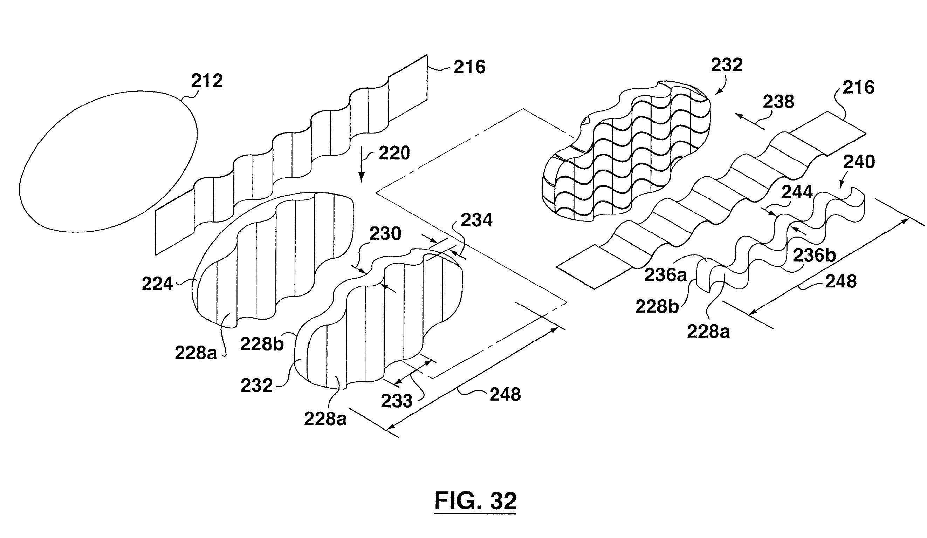

Strips 100 may be manufactured in any suitable fashion. Preferably, strips 100 are cut from a food product, such as a fruit or vegetable. Reference is now made to FIG. 32 which shows an exemplary method of cutting strips 100 from a potato 212. As illustrated, potato 212 may be cut by a blade 216 in a first direction 220 to form a cut food product 224 having an undulating cut surface 228a. Preferably, blade 216 has an undulating profile (wavelength, and amplitude) for forming the undulating surface 228a in cut food product 224.

Next, cut food product 224 may be cut again in the first direction 220 by blade 216 (or another similar blade) parallel and spaced apart from undulating surface 228a to form a food product slice 232 having a first pair of undulating cut surfaces 228a and 228b, and a thickness 230. In the illustrated example, each surface 228a and 228b shares a common wavelength 233, and amplitude 234. Further, surfaces 228a and 228b are shown undulating in phase with each other. It will be appreciated that cut food product 224 may be cut repeatedly in this manner to form a plurality of food product slices 232.

Next, food product slice 232 may be cut in a second direction 238 at an angle (e.g. substantially perpendicularly) to first surfaces 228a and 228b, with a blade 216 (the same blade 216 that cut food product 212 and/or 224, or a different blade) to form a pair of second surfaces 236a and 236b of a food product strip 240. Each of the second surfaces 236a and 236b may be cut by the same blade 216 or a different blade. In the illustrated example, second surfaces 236a and 236b are shown as having been cut parallel and spaced apart by a thickness 242. Preferably, each of second surfaces 236a and 236b is cut with an undulating pattern that is in phase with each other and with first surfaces 228a and 228b. It will be appreciated that food product slice 232 may be repeatedly cut in this manner to form a plurality of food product strips 240.

The potato 212 may be cut to form a food product strip 240, where food product strip 240 may be any embodiment of strip 100 described above. For example, cut food product 224 may be cut by a different blade having a different undulating profile (wavelength and amplitude) than blade 216 used to cut potato 212, to provide a food product slice 232 with surfaces 228a and 228b having different undulating profiles. In some embodiments, cut food product 224 may be cut to form first surface 228b with an undulating pattern that is out of phase with first surface 228a. In some embodiments, cut food product 224 may be cut at an angle to first surface 228a to form a food product slice 232 that tapers along the length 248 of slice 232.

In some examples, food product slice 232 is cut with two or more different blades to form second surfaces 236a and 236b having different undulating patterns, or undulating patterns that are out of phase with each other. In some embodiments, food product slice 232 may be cut to form non-parallel second surfaces 236a and 236b, such that strip 240 tapers along the length 248 of strip 240.

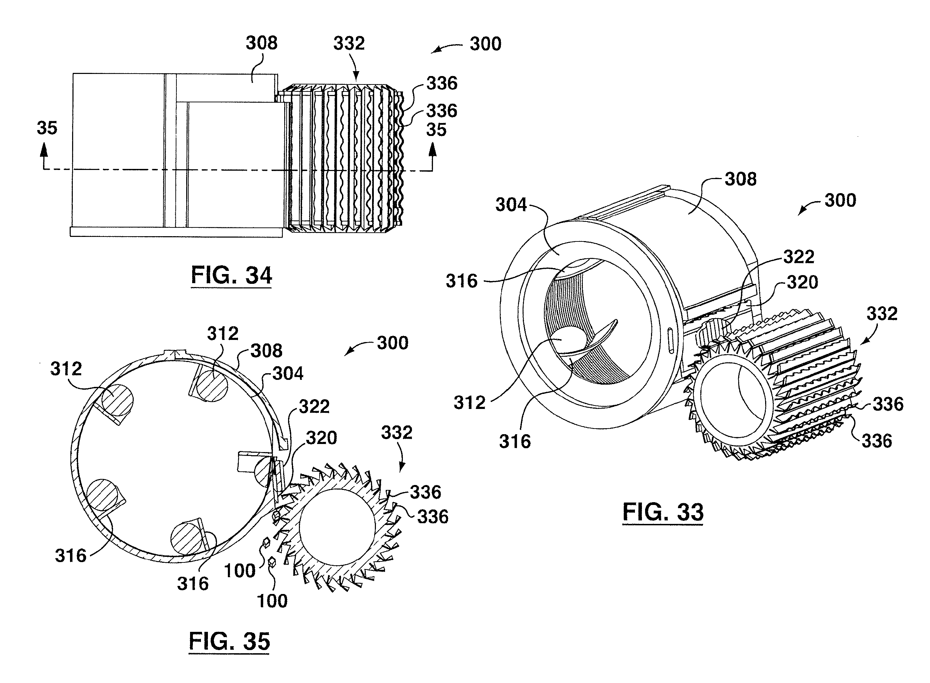

Reference is now made to FIGS. 33-35, which illustrate an exemplary rotary cutting apparatus 300 for cutting food product strips 100. As illustrated, apparatus 300 may include an impeller 304 mounted for rotation within a stationary outer housing 308. Food products 312 (such as potatoes) may be fed axially into the interior of the impeller 304. The rotation of the impeller imparts a centrifugal force on the food products 312 in a radially outward direction. Any suitable number of impeller blades 316 may be secured to the inner periphery of the impeller to carry the food products 312 rotationally about the interior of the housing for repeated cutting engagement with a slab knife 320 so that the food products 312 are cut into a plurality of smaller slices 322.

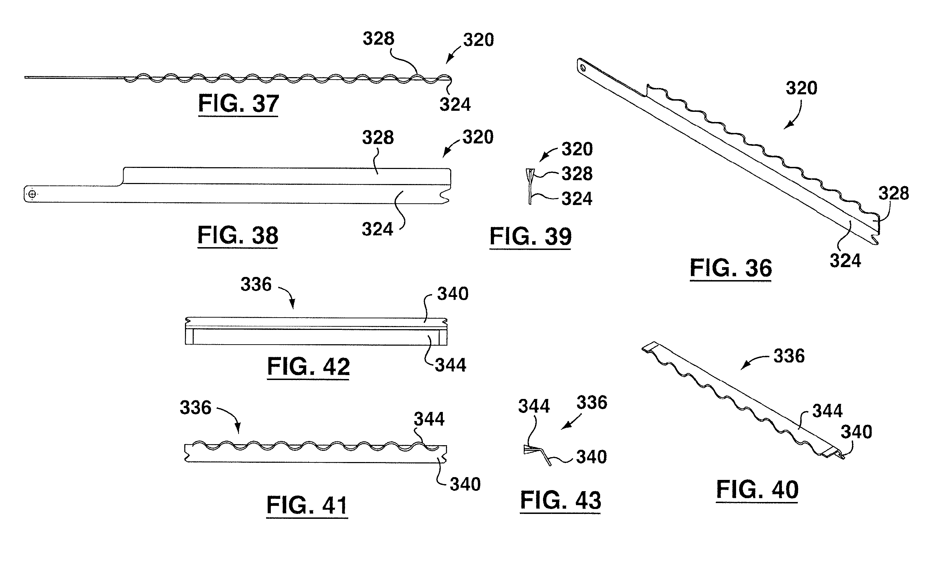

FIGS. 36-39 show an exemplary slab knife 320 for rotary cutting apparatus 300. As shown, slab knife 320 may include a base 324 which may be releasably secured to apparatus 300 in any suitable fashion such as using fasteners (not shown), and a blade 328 for cutting food products 312 into slices 322 (see FIG. 30). Preferably, blade 328 of knife 320 has an undulating profile, including a wavelength and amplitude, for cutting slices 322 with parallel surfaces having the same undulating profile.

Returning to FIGS. 33-35, apparatus 300 may also include a cross-cut spindle 332 having any suitable number of strip knives 336. Slices 322 cut by apparatus 300 may be discharged along a ramp 332 for engagement with knives 336 of cross-cut spindle so that each slice 322 is cut into a plurality of food product strips 100.

FIGS. 40-43 show an exemplary strip knife 336 for cross-cut spindle 332 of rotary cutting apparatus 300. As shown, strip knife 336 may include a base 340 which may be releasably secured to cross-cut spindle 332 (in any suitable fashion such as using fasteners), and a blade 344 for cutting slices 322 into strips 100. Preferably, blade 344 of knife 336 has an undulating profile, including a wavelength and amplitude, for cutting food product strips 100 with a second pair of surfaces having the same undulating profile.

The table below lists exemplary dimensions of food product strips 100, with reference to the geometry labeled on FIGS. 1-5.

| Thickness (in) 124, 128 | Amplitude (in) 160, 168 | Wavelength (in) 164, 172 | Peak to Peak in Profile (in) 348 | Peak to Peak Absolute (in) 352 |
|---|---|---|---|---|
| 0.25 | 0.083 | 0.667 | 0.417 | 0.589 |

(continued)

| Thickness (in) 124, 128 | Amplitude (in) 160, 168 | Wavelength (in) 164, 172 | Peak to Peak in Profile (in) 348 | Peak to Peak Absolute (in) 352 |
|---|---|---|---|---|
| 0.25 | 0.125 | 1.000 | 0.500 | 0.707 |
| 0.375 | 0.125 | 1.000 | 0.625 | 0.884 |
| 0.375 | 0.125 | 1.000 | 0.625 | 0.884 |
| 0.5 | 0.167 | 1.333 | 0.833 | 1.179 |
| 0.5 | 0.125 | 1.000 | 0.750 | 1.061 |

While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the invention and non-limiting and it will be understood by persons skilled in the art that other variants and modifications may be made without departing from the scope of the invention as defined in the claims appended hereto. The scope of the claims should not be limited by the preferred embodiments and examples, but should be given the broadest interpretation consistent with the description as a whole.

Items

Item 1. A method of cutting a wiggle-shaped food product strip, the method comprising: cutting an undulating slice from a food product, the slice having two opposed undulating first surfaces,
wherein the first surfaces are spaced apart by a slice thickness, wherein the first surfaces have a first undulation amplitude parallel to the slice thickness, and the first undulation amplitude is at least ¼ of the slice thickness; and cutting a wiggle-shaped strip from the slice, the strip having two opposed undulating second surfaces, the two first surfaces and the two second surfaces extending longitudinally,
wherein the second surfaces are positioned at an angle to the first surfaces, the second surfaces are spaced apart by a strip thickness, the second surfaces have a second undulation amplitude parallel to the strip thickness, and the second undulation amplitude is at least ¼ of the strip thickness.

Item 2. The method of item 1, wherein:

the first undulation amplitude is at least ¼ of the slice thickness, and

the second undulation amplitude is at least ½ of the strip thickness.

Item 3. The method of item 1, wherein:

the first undulation amplitude is at least ⅓ of the slice thickness, and

the second undulation amplitude is at least ⅓ of the strip thickness.

Item 4. The method of item 1, wherein:

the first undulation amplitude is at least 2/3 of the slice thickness, and

the second undulation amplitude is at least 2/3 of the strip thickness.

Item 5. The method of any one of items 1-4, wherein:

the first surfaces have a first undulation wavelength of at least 4 times the first undulation amplitude, and
the second surfaces have a second undulation wavelength of at least 4 times the second undulation amplitude.

Item 6. The method of any one of items 1-5, wherein:

the first surfaces are substantially perpendicular to the second surfaces.

Item 7. The method of any one of items 1-6, wherein:

the first surfaces undulate in phase with the second surfaces.

Item 8. The method of any one of items 1-7, wherein:

cutting the undulating slice comprises cutting the food product with at least one undulating first blade, the first blade having a blade undulation amplitude equal to the first undulation amplitude, and

cutting the wiggle-shaped strip comprises cutting the food product slice with at least one undulating second blade, the second blade having a blade undulation amplitude equal to the second undulation amplitude.

Item 9. The method of any one of items 1-8, further comprising:

repeating said cutting the undulating slice to form a plurality of undulating slices from the food product.

Item 10. The method of any one of items 1-9, further comprising:

repeating said cutting the wiggle-shaped strip to form a plurality of wiggle-shaped strips from the slice.

Item 11. A method of cutting a wiggle-shaped food product strip, the method comprising:

cutting an undulating slice from a food product, the slice having two opposed undulating first surfaces; and

cutting a wiggle-shaped strip from the slice, the strip having two opposed undulating second surfaces, the two first surfaces, and a Serving Yield of at least 2.

Item 12. The method of item 11, wherein the wiggle-shaped strip has a Serving Yield of at least 2.5.

Item 13. The method of item 11, wherein the wiggle-shaped strip has a Serving Yield of at least 3.

Item 14. The method of any one of items 11-13, wherein the first surfaces are spaced apart by a slice thickness, wherein the first surfaces have a first undulation amplitude parallel to the slice thickness, and the first undulation amplitude is at least % of the slice thickness.

Item 15. The method of item 14, wherein the second surfaces are positioned at an angle to the first surfaces, the second surfaces are spaced apart by a strip thickness, the second surfaces have a second undulation amplitude parallel to the strip thickness, and the second undulation amplitude is at least ¼ of the strip thickness.

Item 16. The method of item 15, wherein:

the first undulation amplitude is at least ½ of the slice thickness, and

the second undulation amplitude is at least ½ of the strip thickness.

Item 17. The method of item 15, wherein:

the first undulation amplitude is at least ⅓ of the slice thickness, and

the second undulation amplitude is at least ⅓ of the strip thickness.

Item 18. The method of item 15, wherein:

the first undulation amplitude is at least 2/3 of the slice thickness, and

the second undulation amplitude is at least 2/3 of the strip thickness.

Item 19. The method of any one of items 15-18, wherein:

the first surfaces have a first undulation wavelength of at least 4 times the first undulation amplitude, and

the second surfaces have a second undulation wavelength of at least 4 times the second undulation amplitude.

Item 20. The method of any one of items 11-19, wherein:

the first surfaces are substantially perpendicular to the second surfaces.

Item 21. The method of any one of items 11-20, wherein:

the first surfaces undulate in phase with the second surfaces.

Item 22. The method of any one of items 15-21, wherein:

cutting the undulating slice comprises cutting the food product with at least one undulating first blade, the first blade having a blade undulation amplitude equal to the first undulation amplitude, and

cutting the wiggle-shaped strip comprises cutting the food product slice with at least one undulating second blade, the second blade having a blade undulation amplitude equal to the second undulation amplitude.

Item 23. The method of any one of items 15-22, further comprising:

repeating said cutting the undulating slice to form a plurality of undulating slices from the food product.

Item 24. The method of any one of items 15-23, further comprising:

repeating said cutting the wiggle-shaped strip to form a plurality of wiggle-shaped strips from the slice.

Item 25. A wiggle-shaped food product strip, comprising:

an elongate food product strip,

wherein the strip comprises a first pair of opposed undulating first surfaces, and a second pair of opposed undulating second surfaces, the first and second surfaces extending longitudinally;

wherein the first surfaces are spaced apart by a first thickness, the first surfaces have a first undulation amplitude parallel to the first thickness, and the first undulation amplitude is at least ¼ of the first thickness;

wherein the second surfaces are spaced apart by a second thickness, the second surfaces have a second undulation amplitude parallel to the second thickness, and the second undulation amplitude is at least % of the second thickness.

Item 26. The food product strip of item 25, wherein:

the elongate strip of food product has transverse cross-sectional shape that is substantially four sided.

Item 27. The food product strip of any one of items 25-26, wherein:

the first undulation amplitude is at least ½ of the slice thickness, and

the second undulation amplitude is at least ½ of the strip thickness.

Item 28. The food product strip of any one of items 25-26, wherein:

the first undulation amplitude is at least ⅓ of the slice thickness, and

the second undulation amplitude is at least ⅓ of the strip thickness.

Item 29. The food product strip of any one of items 25-26, wherein:

the first undulation amplitude is at least 2/3 of the slice thickness, and

the second undulation amplitude is at least 2/3 of the strip thickness.

Item 30. The food product strip of any one of items 25-29, wherein:

the first surfaces have a first undulation wavelength of at least 4 times the first undulation amplitude, and

the second surfaces have a second undulation wavelength of at least 4 times the second undulation amplitude.

Item 31. The food product strip of any one of items 25-30, wherein:

the first surfaces are substantially perpendicular to the second surfaces.

Item 32. The food product strip of any one of items 25-31, wherein:

the first surfaces undulate in phase with the second surfaces.

Item 33. A wiggle-shaped food product strip, comprising:

an elongate food product strip having opposed first and second ends, at least four undulating longitudinal surfaces each extending between the first and second ends,
and a Serving Yield of at least 2.

Item 34. The food product strip of item 33, wherein the wiggle-shaped strip has a Serving Yield of at least 2.5.

Item 35. The food product strip of item 33, wherein the wiggle-shaped strip has a Serving Yield of at least 3.

Item 36. The food product strip of any one of items 33-35, wherein the first surfaces are spaced apart by a slice thickness, wherein the first surfaces have a first undulation amplitude parallel to the slice thickness, and the first undulation amplitude is at least ¼ of the slice thickness.

Item 37. The food product strip of item 36, wherein the second surfaces are positioned at an angle to the first surfaces, the second surfaces are spaced apart by a strip thickness, the second surfaces have a second undulation amplitude parallel to the strip thickness, and the second undulation amplitude is at least ¼ of the strip thickness.

Item 38. The food product strip of item 37, wherein:

the first undulation amplitude is at least ½ of the slice thickness, and

the second undulation amplitude is at least ½ of the strip thickness.

Item 39. The food product strip of item 37, wherein:

the first undulation amplitude is at least ⅓ of the slice thickness, and

the second undulation amplitude is at least ⅓ of the strip thickness.

Item 40. The food product strip of item 37, wherein:

the first undulation amplitude is at least 2/3 of the slice thickness, and

the second undulation amplitude is at least 2/3 of the strip thickness.

Item 41. The food product strip of any one of items 37-40, wherein:

the first surfaces have a first undulation wavelength of at least 4 times the first undulation amplitude, and

the second surfaces have a second undulation wavelength of at least 4 times the second undulation amplitude.

Item 42. The food product strip of any one of items 33-41, wherein:

the first surfaces are substantially perpendicular to the second surfaces.

Item 43. The food product strip of any one of items 33-42, wherein:

the first surfaces undulate in phase with the second surfaces.

Item 44. A package of wiggle-shaped food product strips, comprising:

an air-tight retail packaging containing at least ten of the wiggle-shaped food product strips of item 25.

Item 45. The package of item 44, wherein for each wiggle-shaped food product strip:

the elongate strip of food product has transverse cross-sectional shape that is substantially four sided.

Item 46. The package of any one of items 44-45, wherein for each wiggle-shaped food product strip:

the first undulation amplitude is at least ½ of the slice thickness, and

the second undulation amplitude is at least ½ of the strip thickness.

Item 47. The package of one of items 44-45, wherein for each wiggle-shaped food product strip:

the first undulation amplitude is at least ⅓ of the slice thickness, and

the second undulation amplitude is at least ⅓ of the strip thickness.

Item 48. The package of one of items 44-45, wherein for each wiggle-shaped food product strip:

the first undulation amplitude is at least 2/3 of the slice thickness, and

the second undulation amplitude is at least 2/3 of the strip thickness.

Item 49. The package of one of items 44-48, wherein for each wiggle-shaped food product strip:

the first surfaces have a first undulation wavelength of at least 4 times the first undulation amplitude, and

the second surfaces have a second undulation wavelength of at least 4 times the second undulation amplitude.

Item 50. The package of one of items 44-49, wherein for each wiggle-shaped food product strip:

the first surfaces are substantially perpendicular to the second surfaces.

Item 51. The package of one of items 44-50, wherein for each wiggle-shaped food product strip:

the first surfaces undulate in phase with the second surfaces.

Item 52. A package of wiggle-shaped food product strips, comprising:

an air-tight retail packaging containing at least ten of the wiggle-shaped food product strips of item 33.

Item 53. The package of item 52, wherein for each of wiggle-shaped food product strip, the wiggle-shaped strip has a Serving Yield of at least 2.5.

Item 54. The package of item 52, wherein for each of wiggle-shaped food product strip, the wiggle-shaped strip has a Serving Yield of at least 3.

Item 55. The package of any one of items 52-54, wherein for each of wiggle-shaped food product strip, the first surfaces are spaced apart by a slice thickness, wherein the first surfaces have a first undulation amplitude parallel to the slice thickness, and the first undulation amplitude is at least % of the slice thickness.

Item 56. The package of item 55, wherein for each of wiggle-shaped food product strip, the second surfaces are positioned at an angle to the first surfaces, the second surfaces are spaced apart by a strip thickness, the second surfaces have a second undulation amplitude parallel to the strip thickness, and the second undulation amplitude is at least ¼ of the strip thickness.

Item 57. The package of item 56, wherein for each of wiggle-shaped food product strip:

the first undulation amplitude is at least ½ of the slice thickness, and

the second undulation amplitude is at least ½ of the strip thickness.

Item 58. The package of item 56, wherein for each of wiggle-shaped food product strip:

the first undulation amplitude is at least ⅓ of the slice thickness, and
the second undulation amplitude is at least ⅓ of the strip thickness.

Item 59. The package of item 56, wherein for each of wiggle-shaped food product strip:

the first undulation amplitude is at least 2/3 of the slice thickness, and

the second undulation amplitude is at least 2/3 of the strip thickness.

Item 60. The package of any one of items 56-59, wherein for each of wiggle-shaped food product strip:

the first surfaces have a first undulation wavelength of at least 4 times the first undulation amplitude, and

the second surfaces have a second undulation wavelength of at least 4 times the second undulation amplitude.

Item 61. The package of any one of items 52-60, wherein for each of wiggle-shaped food product strip:

the first surfaces are substantially perpendicular to the second surfaces.

Item 62. The package of any one of items 52-61, wherein for each of wiggle-shaped food product strip:

the first surfaces undulate in phase with the second surfaces.

**Claims**

1. A method of cutting a wiggle-shaped food product strip, the method comprising:

cutting an undulating slice from a food product, the slice having two opposed undulating first surfaces, wherein the first surfaces are spaced apart by a slice thickness, wherein the first surfaces have a first undulation amplitude parallel to the slice thickness, and the first undulation amplitude is at least ¼ of the slice thickness; and
cutting a wiggle-shaped strip from the slice, the strip having two opposed undulating second surfaces, the two first surfaces and the two second surfaces extending longitudinally,
wherein the second surfaces are positioned at an angle to the first surfaces, the second surfaces are spaced apart by a strip thickness, the second surfaces have a second undulation amplitude parallel to the strip thickness, and the second undulation amplitude is at least ¼ of the strip thickness.

2. The method of claim 1, wherein:

the first undulation amplitude is at least ⅓, optionally at least ½, optionally at least 2/3, of the slice thickness, and the second undulation amplitude is at least ⅓, optionally at least ½, optionally at least 2/3, of the strip thickness.

3. The method of claim 1 or 2, wherein:

the first surfaces have a first undulation wavelength of at least 4 times the first undulation amplitude, and the second surfaces have a second undulation wavelength of at least 4 times the second undulation amplitude.

4. The method of any one of claims 1 to 3, wherein:

the first surfaces are substantially perpendicular to the second surfaces.

5. The method of any one of claims 1 to 3, wherein:

the first surfaces undulate in phase with the second surfaces.

6. The method of any one of claims 1 to 5, wherein:

cutting the undulating slice comprises cutting the food product with at least one undulating first blade, the first blade having a blade undulation amplitude equal to the first undulation amplitude, and cutting the wiggle-shaped strip comprises cutting the food product slice with at least one undulating second blade, the second blade having a blade undulation amplitude equal to the second undulation amplitude.

7. The method of any one of claims 1 to 6, further comprising:

repeating said cutting the undulating slice to form a plurality of undulating slices from the food product.

8. The method of any one of claims 1 to 7, further comprising:

repeating said cutting the wiggle-shaped strip to form a plurality of wiggle-shaped strips from the slice.

9. A method of cutting a wiggle-shaped food product strip, the method comprising:

cutting an undulating slice from a food product, the slice having two opposed undulating first surfaces; and cutting a wiggle-shaped strip from the slice, the strip having two opposed undulating second surfaces, the two first surfaces, and a Serving Yield of at least 2, optionally at least 2.5, optionally at least 3.

10. A wiggle-shaped food product strip, comprising:

an elongate food product strip, wherein the strip comprises a first pair of opposed undulating first surfaces, and a second pair of opposed undulating second surfaces, the first and second surfaces extending longitudinally; wherein the first surfaces are spaced apart by a first thickness, the first surfaces have a first undulation amplitude parallel to the first thickness, and the first undulation amplitude is at least % of the first thickness; wherein the second surfaces are spaced apart by a second thickness, the second surfaces have a second undulation amplitude parallel to the second thickness, and the second undulation amplitude is at least % of the second thickness.

11. The food product strip of claim 10, wherein:

the elongate strip of food product has transverse cross-sectional shape that is substantially four sided.

12. The food product strip of claim 10 or 11, wherein:

the first undulation amplitude is at least ½ of the slice thickness, and
the second undulation amplitude is at least ½ of the strip thickness.

13. The food product strip of claim 10 or 11, wherein:

the first undulation amplitude is at least ⅓, optionally at least %, of the slice thickness, and
the second undulation amplitude is at least ⅓, optionally at least %, of the strip thickness.

14. The food product strip of any one of claims 10 to 13, wherein:

the first surfaces have a first undulation wavelength of at least 4 times the first undulation amplitude, and
the second surfaces have a second undulation wavelength of at least 4 times the second undulation amplitude.

15. A package of wiggle-shaped food product strips, comprising:

an air-tight retail packaging containing at least ten of the wiggle-shaped food product strips of any one of claims 10 to 14.

FIG. 1

FIG. 2

FIG. 3

FIG. 4

FIG. 5

EP 3 034 253 A1

FIG. 6

FIG. 7

FIG. 8

FIG. 9

FIG. 10

19

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

EP 3 034 253 A1

**FIG. 26**

**FIG. 25**

**FIG. 27**

FIG. 28

FIG. 29

FIG. 30

FIG. 31

**FIG. 32**

EP 3 034 253 A1

FIG. 33

FIG. 34

FIG. 35

FIG. 36

FIG. 40

FIG. 39

FIG. 43

FIG. 37

FIG. 38

FIG. 42

FIG. 41

EP 3 034 253 A1

356

100

100

**FIG. 44**

Europäisches
Patentamt

European
Patent Office

Office européen
des brevets

# EUROPEAN SEARCH REPORT

Application Number

EP 15 20 0892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 219 575 A (MCLAUGHLIN RICHARD L [US] ET AL) 26 August 1980 (1980-08-26) * column 2, line 52 - line 57; figure 1 * ----- | 1-15 | INV. B26D1/36 B26D3/10 B26D3/26 B26D1/00 |
| X | US 3 643 721 A (HAUBNER JOHN E) 22 February 1972 (1972-02-22) * figures 2,4,6 * ----- | 1-15 | |

TECHNICAL FIELDS
SEARCHED      (IPC)

A23P
B26D
A23L

The present search report has been drawn up for all claims

| Place of search | Date of completion of the search | Examiner |
|---|---|---|
| Munich | 4 May 2016 | Müller, Andreas |

EPO FORM 1503 03.82 (P04C01)

## ANNEX TO THE EUROPEAN SEARCH REPORT
## ON EUROPEAN PATENT APPLICATION NO.

EP 15 20 0892

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2016

| Patent document cited in search report | | Publication date | Patent family member(s) | | Publication date |
|---|---|---|---|---|---|
| US 4219575 | A | 26-08-1980 | AU | 525970 B2 | 09-12-1982 |
| | | | AU | 4493479 A | 22-05-1980 |
| | | | CA | 1108465 A | 08-09-1981 |
| | | | DE | 2919846 A1 | 22-05-1980 |
| | | | GB | 2035036 A | 18-06-1980 |
| | | | JP | S5571469 A | 29-05-1980 |
| | | | US | 4219575 A | 26-08-1980 |
| US 3643721 | A | 22-02-1972 | CA | 942167 A | 19-02-1974 |
| | | | GB | 1300188 A | 20-12-1972 |
| | | | US | 3643721 A | 22-02-1972 |

EPO FORM P0459

For more details about this annex : see Official Journal of the European Patent Office, No. 12/82